# EUROPÄISCHE PATENTSCHRIFT

(11) **EP 1 972 414 B1**
(45) Veröffentlichungstag und Bekanntmachung des Hinweises auf die Patenterteilung: **13.01.2010**
(21) Anmeldenummer: 08102574.4
(22) Anmeldetag: 13.03.2008
(51) Int. Cl.: B25J 9/10, B25J 19/00

(54) **Roboter-Manipulatorarm-Gelenkantrieb mit Drehmomentstütze**
Robot-manipulator arm-articulated drive with torque support
Entraînement d'articulation de bras manipulatoire de robot avec support de couple

(30) Priorität: 23.03.2007 DE 102007014023
(43) Veröffentlichungstag der Anmeldung: 24.09.2008
(73) Patentinhaber: Deutsches Zentrum für Luft- und Raumfahrt e.V., 51147 Köln (DE)
(72) Erfinder: Wolf, Sebastian, 80802 München (DE)
(74) Vertreter: von Kirschbaum, Alexander

(56) Entgegenhaltungen:
- DE-A1- 3 702 494
- DE-A1- 10 010 680
- GB-A- 1 599 118

## Beschreibung

Die Erfindung bezieht sich auf einen Roboter-Manipulatorarm-Gelenkantrieb mit einem Antriebsmotor und einem Antriebsgetriebe, das eine um eine Axiale drehbare Drehmomentstütze und einen Abtrieb aufweist.

Manipulatorarm-Gelenkantriebe für Roboter werden zum Antrieb von Maniputatorarm-Elementen eingesetzt, beispielsweise als Gelenkantriebe mehrerer Manipulatorarm-Elemente eines Industrieroboters. Manipulatorarm-Gelenkantriebe werden jedoch auch zum Antrieb von Manipulatorarm-Elementen für nicht-industrielle Roboter benötigt, beispielsweise für Haushaltsroboter.

Sowohl bei Industrierobotern als auch bei Haushalts-Robotern werden in der Regel steife Gelenkantriebe eingesetzt, die keine federnde, sondern eine nahezu ungefederte Verbindung zwischen dem einem Manipulatorarm- Element und dem anderen Manipulatorarm- Element herstellen. Ein steifer Gelenkantrieb bietet ein Höchstmaß an Reproduzierbarkeit und Positioniergenauigkeit. Zur Abfederung von Stößen bzw. Verminderiung der Gefahr von Verletzungen und/oder Beschädigungen werden gefederte Gelenkantriebe eingesetzt. Hierbei wird in der Regel eine Drehmomentstütze des Antriebsgetriebes durch eine Federung federnd abgestützt.

Bekannte Gelenkantriebe weisen gefederte Drehmomentstützen mit nicht veränderbarer Federung auf, die wenig kompakt aufgebaut sind. Eine harte Federung stellt eine hohe Positioniergenauigkeit sicher, eine weiche Federung dagegen bietet ein höheres Maß an Verletzungs- und Beschädigungsschutz.

Aus der DE-A-3702454 ist ein Robotur-Manipulatorarm-Gelenkantrieb mit einer gefederten Drehmomentstütze bekannt.

Aufgabe der Erfindung ist es dem gegenüber, einen Roboter-Manipulatorarm-Gelenkantrieb mit einer kompakt aufgebauten Drehmomentstütze zu schaffen.

Diese Aufgabe wird erfindungsgemäß gelöst mit den Merkmalen des Patentanspruches 1.

Der erfindungsgemäße Roboter-Manipulatorarm-Gelenkantrieb weist eine Drehmomentstütze auf, die eine Kurvenscheibe aufweist, die bezogen auf die Axiale in einer Zylinderebene liegt und auf der ein durch eine Spannfeder axial vorgespanntes Kurvenrad läuft. Die Kurvenbahn der Kurvenscheibe liegt ebenfalls in der Zylinderebene, wobei der Verlauf der Kurvenbahn, also ihre Höhenlinie, grundsätzlich jeden beliebigen sinnvollen Verlauf einnehmen kann. Bevorzugter Weise ist die Kurvenbahn, bzw. ihre Abwicklung auf eine Ebene, im Wesentlichen wannenförmig, das heißt, sie weist eine Talsohle und an beiden Seiten der Talsohle jeweils eine aufwärts geneigte Flanke auf.

Das auf der Kurvenscheibe bzw. auf der Kurvenbahn laufende Kurvenrad ist im Wesentlichen axial vorgespannt und axial geführt. Die Drehmomentstütze baut also im Wesentlichen in axialer Richtung und kann daher auch bei hoher Energiedichte kompakt aufgebaut werden. Der Radius bzw. Durchmesser der Drehmomentstütze wird im Wesentlichen bestimmt durch die Länge des gewünschten mechanischen Hebels zwischen der Axialen und der Kurvenscheibe bzw. der Kurvenbahn. Diese Hebel-Länge wiederum bestimmt die FederungsKennlinie der gefederten Drehmomentstütze,

Gemäß einer bevorzugten Ausgestaltung weist die Kurvenbahn der Kurvenscheibe mindestens einen Rastpunkt auf. In den Rastpunkt in Form einer Mulde taucht das Kurvenrad ein. Idealerweise weist der Rastpunkt bzw. die Mulde ungefähr einen Radius auf, der dem Radius des Kurvenrades entspricht oder aber kleiner ist. Hierdurch werden Sprünge in der Federungskennlinie erzeugt. Diese Sprünge in der Federungskennlinie können nur überwunden werden, wenn das durch das Antriebsgetriebe in die Drehmomentstütze eingeleitete Drehmoment größer als das Rastmoment im Rastpunkt ist.

Grundsätzlich kann die Kurvenbahn der Kurvenscheibe verschiedene Grundformen einnehmen. Durch eine Konkavform im Bereich der Flanken wird eine progressive Federkennlinie programmiert. Durch eine konvexe Form der Flanke der Kurvenbahn wird eine degressive Federkennlinie erzeugt. Die Form der Kurvenbahn kann bezogen auf Ihren tiefsten Punkt, also die lastfreie Ruhelage, auch asymmetrisch ausgeführt werden, so dass in beiden Auslenkungsrichtungen verschiedene Federkennlinien programmiert sind.

Vorzugsweise sind der Drehmomentstütze mehrere Kurvenbahnen mit jeweils einem Kurvenrad zugeordnet. Die Kurvenbahnen können auf einer Kreislinie nebeneinander liegend angeordnet sein. Auf diese Weise lassen sich insbesondere die axialen Kräfte, die von den axial vorgespannten Kurvenrädern auf die Drehmomentstütze ausgeübt werden, symmetrieren. Die Kurvenbahnen können jeweils verschiedene Verläufe aufweisen, so dass mit Hilfe mehrerer verschiedener Kurvenbahnen komplexe Gesamt-Federkennlinien für die Drehmomentstütze eingestellt werden können. Ferner können auf diese Weise auf sehr kleinem Raum sehr hohe Rückstellkräfte realisiert werden, was einen kompakten Aufbau der Drehmomentstütze bei hoher Energiedichte erlaubt.

Gemäß einer bevorzugten Ausgestaltung sind die Übergänge zwischen den Kurvenbahnen anschlagfrei ausgebildet. Beim Auftreten einer Grenzlast können die Kurvenräder in die benachbarte Kurvenscheibe bzw. in die benachbarte Kurvenbahn überlaufen bzw. überspringen. Hierdurch können extreme Lastspitzen entschärft bzw. vermieden werden.

Alternativ können zwischen den Kurvenbahnen bzw. zwischen den einzelnen Kurvenscheiben Anschläge vorgesehen werden, die ein Überspringen eines Kurvenrades auf eine benachbarte Kurvenbahn gerade verhindern.

Gemäß einer bevorzugten Ausgestaltung sind die Kurvenräder an einem verdrehfesten Axialschlitten angeordnet, der durch die Spannfeder axial vorgespannt ist. Wenn alle Kurvenbahnen der Kurvenscheiben identisch sind, können alle Kurvenräder an einem einzigen Axialschlitten angeordnet werden, was eine einfache und kompakte Konstruktion erlaubt. Zum axialen Spannen des Axialschlittens können auch mehrere Spannfedern vorgesehen sein.

Vorzugsweise ist eine Federverstellung zur Verstellung der Spannfeder vorgesehen. Die Federverstellung kann während des Betriebes des Roboters die Spannfeder ständig verstellen. Die Rückstellkraft der Drehmomentstütze bzw. ihre Federungskennlinie kann also während des Betriebes des Roboters steif oder weich gemacht werden. Damit ist die Steifheit der Drehmomentstütze jederzeit an die dynamische Situation und die Genauigkeitserfordernisse anpassbar.

Gemäß einer bevorzugten Ausgestaltung weist die Federverstellung einen verdrehfesten Axialschlitten auf, der axial durch einen Verstellantrieb einstellbar ist. Als Verstellantriebs-Motor eignet sich insbesondere ein Elektromotor, der mit einer hohen Untersetzung, beispielsweise realisiert durch ein Schneckengetriebe, den Federverstellungs-Axialschlitten axial verfährt und damit die Vorspannung der Spannfedern verändert.

Im Folgenden wird unter Bezugnahme auf die Zeichnungen ein Ausführungsbeispiel der Erfindung näher erläutert.

Es zeigen:
- Fig. 1: ein Gelenk eines Roboters, das zwei Manipulatorarm-Elemente verbindet und einen Gelenkantrieb aufweist, wobei der Gelenkantrieb im Längsschnitt dargestellt ist, und
- Fig. 2: ein Diagramm des Rückstellmomentes R über den Auslenkwinkel α.

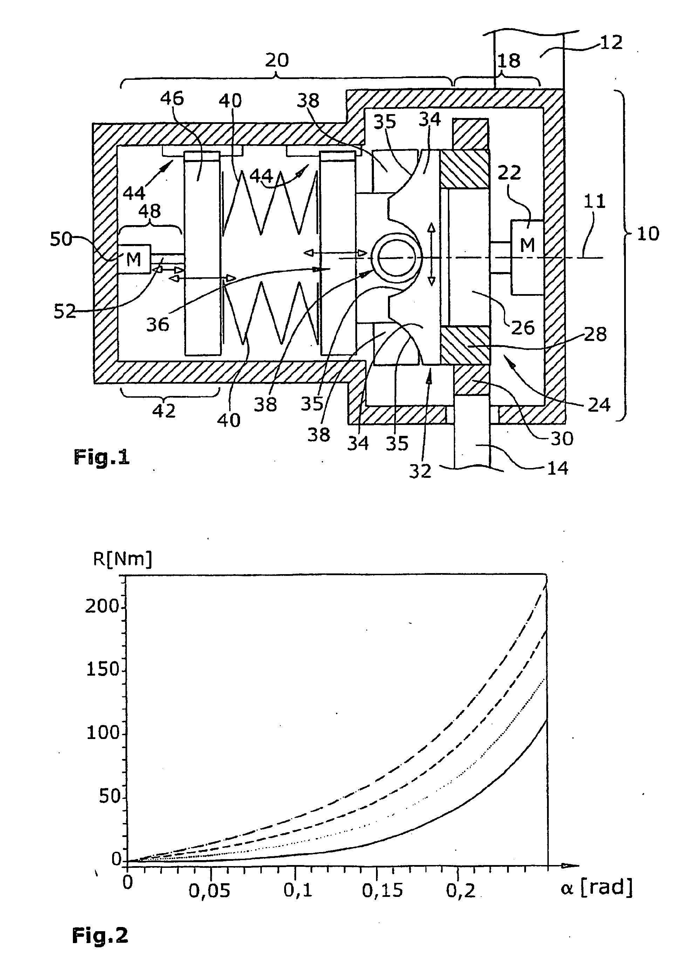

In der Fig. 1 ist ein Manipulatorarm-Gelenkantrieb 10 eines Roboters dargestellt, der ein erstes Manipulatorarm-Element 12 mit einem zweiten Manipulatorarm-Element 14 verbindet, das den Abtrieb bildet. Der Roboter kann ein Industrieroboter und die Manipulatorarm-Elemente 12, 14 können einzelne Elemente eines mehrgliedrigen Manipulatorarmes sein. Der Roboter kann jedoch auch beispielsweise ein Haushalts-Roboter sein, wobei die Manipulatorarm-Elemente 12, 14 Teile eines Roboterarmes oder -beines sind.

Der Gelenkantrieb 10 gliedert sich im Wesentlichen in einen Antriebsteil 18 und eine Drehmomentstütze 20. Der Antriebsteil 18 besteht im Wesentlichen aus einem gehäusefesten Antriebsmotor 22 und einem Antriebsgetriebe 24. Das Antriebsgetriebe 24 ist vorliegend als Gleitkeilgetriebe ausgebildet und weist eine durch den Antriebsmotor 22 angetriebene Wellenscheibe 26, eine flexible außenverzahnte Zahnkette 28 und ein innen verzahntes Hohlrad 30 auf, das den Abtrieb für das zweite Manipulatorarm-Element 14 darstellt. Die Zahnkette 28 ist rotatorisch durch die Drehmomentstütze 20 abgestützt.

Die Drehmomentstütze 20 weist im Wesentlichen ein um die Axiale 11 rotierendes und mit der Zahnkette 28 rotatorisch verbundenes Kopplungsrad 32 mit vier in einer Zylinderebene liegenden Kurvenscheiben 34, einen verdrehfesten vorgespannten Axialschlitten 36 mit vier Kurvenrädern 38, mehrere Spannfedern 40, sowie eine Federverstellung 42 auf.

Die vier Kurvenscheiben 34 und die durch sie definierten Kurvenbahnen 35 liegen bezogen auf die Axiale 11 in einer Zylinderebene. Die Kurvenbahnen 35 sind, wenn ihre Abwicklung betrachtet wird, wannenförmig ausgebildet. Die Übergänge zwischen zwei benachbarten Kurvenbahnen 35 sind anschlagfrei, dass heißt, das betreffende Kurvenrad 38 kann bei Überschreitung eines Grenz-Drehmomentes auf die benachbarte Kurvenbahn 35 überspringen.

Die Kurvenbahnen 35 können jeweils einen Rastpunkt in Form einer Mulde aufweisen, insbesondere in der in Fig. 1 dargestellten Mittelposition des Kopplungsrades 32 bzw. der Kurvenscheibe 34. Das betreffende Kurvenrad 28 taucht in die Mulde des Rastpunktes rastend ein, so dass das Kopplungsrad nur bei Überwindung eines Rastmomentes verdreht wird.

Der Axialschlitten 36 ist axial verschiebbar und ist durch eine Verdrehsicherung 44 rotatorisch fixiert. Die Spannfedern 40 sind Spannfedern, die linear oder progressiv ausgebildet sein können. Die feststehende Seite der Druckfedern 40, ist abgestützt an einem zweiten verdrehfesten Axialschlitten 46 der Federverstellung 42. Auch der zweite Axialschlitten 46 ist durch eine Verdrehsicherung 44 rotatorisch fixiert.

Die Federverstellung 42 weist einen Verstellantrieb 48 auf, der von einem Verstellmotor 50 und einer von dem Verstellmotor 50 angetriebenen Zahnstange 52 gebildet wird. Alternativ zu dem Zahnstangen-Trieb kann auch ein Kugelgewinde-Trieb oder ein Trapezgewinde-Trieb verwendet werden. Mit dem Vertellantrieb 48 wird der Axialschlitten 46 axial verstellt. Hierdurch kann die von den Spannfedern 40 auf den ersten Axialschlitten 36 aufgebrachte Vorspannung während des Betriebes erhöht oder verringert werden.

Mit dem in Fig. 1 dargestellten Gelenkantrieb 10 kann auf einfache Weise ein kompakter Aufbau eines gefederten Gelenkantriebes 10 realisiert werden, der eine hohe Energiedichte und ein während des Betriebes einstellbares Rückstellmoment erlaubt.

In der Fig. 2 sind vier Rückstellmoment-Kurven für vier verschiedene Vorspannungen, dass heißt für vier verschiedene Einstellungen der Federverstellung 42 über den Auslenkwinkel α exemplarisch dargestellt.

## Patentansprüche

1. Roboter-Manipulatorarm-Gelenkantrieb (10) mit einem Antriebsmotor (22) und einem Antriebsgetriebe (24), das eine um eine Axiale (11) drehbare Drehmomentstütze (20) und einen Abtrieb (30) aufweist,
wobei die Drehmomentstütze (20) eine Kurvenscheibe (34) aufweist die bezogen auf die Axiale (11) in einer Zylinderebene liegt und auf der ein durch eine Spannfeder (40) axial vorgespanntes Kurvenrad (38) läuft.

2. Roboter-Manipulatorarm-Gelenkantrieb (10) nach Anspruch 1, **dadurch gekennzeichnet, dass** eine Kurvenbahn (35) der Kurvenscheibe (34) wannenförmig ausgebildet ist.

3. Roboter-Manipulatorarm-Gelenkantrieb (10) nach Anspruch 2, **dadurch gekennzeichnet, dass** die Kurvenbahn (35) mindestens einen Rastpunkt aufweist.

4. Roboter-Manipulatorarm-Gelenkantrieb (10) nach Anspruch 2 oder 3, **dadurch gekennzeichnet, dass** die Drehmomentstütze (20) mehrere Kurvenbahnen (35) und mehrere zugeordnete Kurvenräder (38) aufweist.

5. Roboter-Manipulatorarm-Gelenkantrieb (10) nach Anspruch 4, **dadurch gekennzeichnet, dass** zwischen den benachbarten Kurvenbahnen (35) Anschläge vorgesehen sind.

6. Roboter-Manipulatorarm-Gelenkantrieb (10) nach Anspruch 4, **dadurch gekennzeichnet, dass** zwischen den benachbarten Kurvenbahnen (35) anschlagfreie Übergänge vorgesehen sind.

7. Roboter-Manipulatorarm-Gelenkantrieb (10) nach einem der Ansprüche 1 bis 6, **dadurch gekennzeichnet, dass** das Kurvenrad (38) an einem verdrehfesten Axialschlitten (36) angeordnet ist, der durch die Spannfeder (40) axial vorgespannt ist.

8. Roboter-Manipulatorarm-Gelenkantrieb (10) nach einem der Ansprüche 1 bis 7, **dadurch gekennzeichnet, dass** eine Federverstellung (42) zur Verstellung der Spannfeder (40) vorgesehen ist.

9. Roboter-Manipulatorarm-Gelenkantrieb (10) nach Anspruch 8, **dadurch gekennzeichnet, dass** die Federverstellung (42) einen verdrehfesten Axialschlitten (46) aufweist, der axial durch einen Verstellantrieb (48) einstellbar ist.

## Claims

1. Articulated joint drive (10) for a robot manipulator arm comprising a drive motor (22) and a drive gear (24) which comprises a torque support (20) rotatable about an axial line (11), and an output (30),
wherein the torque support (20) comprises a cam disk (34) situated in a cylinder plane with respect to the axial line (11), a cam wheel (38) moving on said disk, which wheel is biased in the axial direction by a tensioning spring (40).

2. Articulated joint drive (10) for a robot manipulator arm as of claim 1, **characterized in that** a cam track (35) of the cam disk (34) is of a trough-shaped design.

3. Articulated joint drive (10) for a robot manipulator arm as of claim 2, **characterized in that** the cam track (35) comprises at least one snap-in point.

4. Articulated joint drive (10) for a robot manipulator arm as of claim 2 or 3, **characterized in that** the torque support (20) comprises a plurality of cam tracks (35) and a plurality of associated cam wheels (38).

5. Articulated joint drive (10) for a robot manipulator arm as of claim 4, **characterized in that** stops are provided between adjacent cam tracks (35).

6. Articulated joint drive (10) for a robot manipulator arm as of claim 4, **characterized in that** stop-free transitions are provided between adjacent cam tracks (35).

7. Articulated joint drive (10) for a robot manipulator arm as of one of claims 1 to 6, **characterized in that** the cam wheel (38) is arranged on a torsion-proof axial slide (36) axially biased by the tensioning spring (40).

8. Articulated joint drive (10) for a robot manipulator arm as of one of claims 1 to 7, **characterized in that** a spring adjustment means (42) is provided for adjusting the tensioning spring (40).

9. Articulated joint drive (10) for a robot manipulator arm as of claim 8, **characterized in that** the spring adjustment means (42) comprises a torsion-proof axial slide (46) adjustable in the axial direction by means of an adjustment drive (48).

## Revendications

1. Entraînement d'articulation (10) de bras manipulatoire de robot avec support de couple comprenant un moteur d'entraînement (22) et un engrenage d'entraînement (24) ayant un support de couple (20) tournant autour une ligne axiale (11) et une sortie de couple (30),
le support de couple (20) comprenant une came (34) située sur un plan de cylindre par rapport à la ligne axiale (11), sur laquelle came roule une roue de came (38) pré-contrainte dans la direction axiale par un ressort tendeur (40).

2. Entraînement d'articulation (10) de bras manipulatoire de robot selon la revendication 1, **caractérisé en ce qu'**une rainure de came (35) de ladite came (34) est en forme de cuve.

3. Entraînement d'articulation (10) de bras manipulatoire de robot selon la revendication 2, **caractérisé en ce que** ladite rainure de came (35) comprend au moins un point d'arrêt.

4. Entraînement d'articulation (10) de bras manipulatoire de robot selon la revendication 2 ou 3, **caractérisé en ce que** le support de couple (20) comprend plusieurs rainures de came (35) et plusieurs roue de came (38) associées.

5. Entraînement d'articulation (10) de bras manipulatoire de robot selon la revendication 4, **caractérisé en ce que** des butées sont prévues entre les rainures de came (35) adjacentes.

6. Entraînement d'articulation (10) de bras manipulatoire de robot selon la revendication 4, **caractérisé en ce que** des jonctions sans butées sont prévues entre les rainures de came (35) adjacentes.

7. Entraînement d'articulation (10) de bras manipulatoire de robot selon l'une des revendications 1 à 6, **caractérisé en ce qu** la roue de came (38) est disposée sur un chariot axial (36) sécurisé contre la torsion, le chariot étant pré-contraint dans la direction axiale par le ressort tendeur (40).

8. Entraînement d'articulation (10) de bras manipulatoire de robot selon l'une des revendications 1 à 7, **caractérisé en ce qu'**un moyen d'ajustage de ressort (42) est prévu pour l'ajustage du ressort tendeur (40).

9. Entraînement d'articulation (10) de bras manipulatoire de robot selon la revendication 8, **caractérisé en ce que** le moyen d'ajustage de ressort (42) comprend un chariot axial (46) sécurisé contre la torsion qui est ajustable dans la direction axiale par un moteur d'ajustage (48).
